# EUROPÄISCHE PATENTSCHRIFT

(11) **EP 1 707 854 B1**
(45) Veröffentlichungstag und Bekanntmachung des Hinweises auf die Patenterteilung: **14.12.2011**
(21) Anmeldenummer: 06002695.2
(22) Anmeldetag: 10.02.2006
(51) Int. Cl.: F01N 13/18, F16J 15/08

(54) **Abschirmteil, insbesondere Hitzeschild**
Structural element, in particular shielding element
Elément structurel, nottament un elément d'ecran

(30) Priorität: 02.04.2005 DE 102005015246
(43) Veröffentlichungstag der Anmeldung: 04.10.2006
(73) Patentinhaber: ElringKlinger AG, 72581 Dettingen/Erms (DE)
(72) Erfinder: Beutter,Ulrich, 72766 Reutlingen-Reicheneck (DE); Stauber, Harald, 90513 Zrindorf (DE)
(74) Vertreter: nospat Patent- und Rechtsanwälte Naefe Oberdorfer Schmidt

(56) Entgegenhaltungen:
- EP-A- 1 308 653
- JP-A- 11 280 907
- US-A- 5 636 515
- US-A1- 2004 232 625

## Beschreibung

Die Erfindung betrifft ein Abschirmteil, insbesondere Hitzeschild, gemäß der Merkmalsausgestaltung des Oberbegriffes des Patentanspruches 1.

Während die Wärmeentwicklung, beispielsweise eines sparsamen leistungsoptimierten Dieselmotors, am Zylinderkurbelwellengehäuse sehr gering sein kann, gilt das für "heiße Zonen", wie bei Krümmer, Turbolader, Katalysator etc., keineswegs. Durch die immer kompaktere Konstruktion der Motoren geraten zunehmend Komponenten in enge Nachbarschaft, die thermisch nicht "kompatibel" sind. Demgemäß ist es notwendig, mit sog. Abschirmteilen, wie Hitzeschildern, thermische Motorenkomponenten gegenüber angrenzenden wärmeempfindlichen Aggregaten, wie Sensoren, Kraftstoffleitungen, Druckdosen, Karosserieteilen etc., zu schützen. Die Situation wird durch den Kompaktbau auch insofern verschärft, dass die hohe Packungsdichte der Aggregate den kühlenden Luftstrom im Motorraum einengt. Auch Lärmschutzmaßnahmen können dazu mit beitragen. So können beispielsweise Kunstoffbodenplatten, die den Schallaustritt vom Motorraum zur Fahrbahn vermindern sollen, unter Umständen eine wirkungsvolle Isolation erzeugen, mit der Wärme im Motorraum eingeschlossen wird. Katalysatoren zählen wegen ihrer phasenweisen hohen Oberflächentemperatur zu den Hitzequellen, die den Einsatz von schützenden Schildbarrieren jedenfalls erforderlich machen können. Ein typisches Beispiel hierfür sind konstruktive Maßnahmen, wie die Positionierung des Katalysators dicht am Krümmer. Dieses Bauprinzip, das der schnellen Aufheizung des Katalysators und damit der Emissionsminderung in der Kaltstartphase dient, verlegt eine starke Hitzequelle in den Motorraum, wo sich zahlreiche Aggregate auf engem Raum drängen. Jedenfalls eine Ursache für die wachsende Bedeutung von Abschirmteilen, wie Hitzeschildern, ist der Trend zum Einsatz von Thermoplasten. Die hervorragend formbaren, leichten und wirtschaftlichen Werkstoffe setzen sich im Motorraum zusehends durch, erfordern aber ein besonderes Augenmerk im Hinblick auf die Umgebungstemperaturen am Einsatzort bezogen auf sonstige thermische Motorenteile (Neue Werkstoffe und Entwicklungs-Tools für den Hitzeschutz in MTZ 12/2001, Jahrg.72, Seite 1044ff).

Durch die EP-A-1 298 365 ist eine metallische Zylinderkopfdichtung bekannt mit einer mindestens eine Brennraumöffnung als Durchgangsöffnung aufweisenden Dichtungsplatte als Dichtungseinheit, welche mindestens zwei Metallblechlagen aufweist, von denen eine erste mit mindestens einer elastisch höhenverformbaren, die Brennraumöffnung umschließenden Sicke und eine zweite mit mindestens einer die Sickenverformung begrenzenden, die Brennraumöffnung umgebenden Verformungsbegrenzungseinrichtung versehen ist.

Durch die WO 01/96768 ist des weiteren eine als Flachdichtung ausgebildete Zylinderkopfdichtung bekannt mit mindestens einer metallischen Lage, in der mindestens eine Durchgangsöffnung (Brennraumöffnung) ausgebildet ist. Diese oder zumindest eine der metallischen Lagen ist zumindest bereichsweise in Form einer wellen- oder sägezahnförmigen Profilierung um die jeweilige Brennraumöffnung ausgebildet, wobei zumindest die Lage, in der die Profilierung ausgebildet ist, aufgrund der benötigten sehr hohen Elastizitätsgrenzen aus einem Federstahl zu bestehen hat, wobei die Profilierung eine Verformungsbegrenzungseinrichtung für eine zusätzlich ausgebildete Sicke aufweist.

Bei den vorstehend genannten bekannten Lösungen wird eine wärme- oder schalldämmende Bauteilabschirmung sowie eine Abdichtung fluidführender Bauräume auch in Gasform voneinander getrennt vorgenommen. Das heißt, Abschirmteile in Form von Hitzeschildern dienen als eigenständiges Bauteil der Schall- und Wärmeisolierung und gegebenenfalls mehrlagige Blechdichtungsstrukturen dienen insbesondere im Bereich von Zylinderkopfanordnungen der Abdichtung von fluidführenden Räumen. Die bekannten Lösungen zeichnen sich also durch eine entsprechende Teilevielfalt aus, was zu erhöhten Herstell- und Montagekosten führt.

Durch die US 2004/0232625 A1 ist ein gattungsgemäßes Abschirmteil, insbesondere Hitzeschild bekannt, bestehend aus zumindest teilweise übereinanderliegenden, flächig ausgebildeten Schirmteilen, die zumindest teilweise entlang mindestens einer gemeinsamen Verbindungslinie miteinander verbunden sind, wobei die Schirmteile zumindest teilweise eine Dichtung ausbilden, die eine Durchgriffsöffnung umfaßt, die durch alle Schirmteile hindurchgeht. Bei dem bekannten Abschirmteil ist das mittlere Schirmteil im Bereich der Durchgriffsöffnung nach außen umgefalzt und bildet dergestalt einen ringförmigen Aufnahmekanal aus für die Aufnahme der eigentlichen Ringdichtung. Die darüber und darunter angeordneten Schirmteillagen schließen sich dergestalt an das mittlere Schirmteil unter Bildung des Lagenverbundes an. Im dahingehenden Lagenverbund werden dann die einzelnen Schirmteile zur Komplementierung des Abschirmteils fest miteinander verbunden, beispielsweise unter Einsatz eines üblichen Punktschweißen an vier voneinander getrennten Stellen des Lagenverbundes. Wird das bekannte Abschirmteil als Hitzeschild konzipiert, thermischen Belastungen ausgesetzt, sind aufgrund der starren Schirmteillagenanordnung weder thermische Beuleffekte auszuschließen, noch das Teile der Schirmlagen einreißen können.

Durch die JP 11 280907 A ist eine mehrlagige, insbesondere fünflagige Dichtung für einen Turbolader bekannt, bei dem die Dichtung einen heißen Abgasstrom gegenüber der Umgebung abdichtet. Die bekannte Dichtungslösung weist eine mittlere Dichtungslage auf, die von zwei weiteren, nach außen unmittelbar anschließenden Dichtungslagen derart flächig umfaßt ist, dass flanschartige Verlängerungen der dahingehend äußeren Dichtungslagen unmittelbar in Anlage miteinander kommen und dabei klemmend den endseitigen Rand der mittleren Dichtlage mit einschließen. Ferner sind die beiden äußeren Dichtungslagen mit einem konvex vorspringenden Überstand versehen, der in den beiden gegenüberliegenden Richtungen eine vorspringende Ringdichtung ausbildet. Eine zusätzliche Stopperlage der dahingehenden Dichtungsanordnung untergreift den beschriebenen Dichtlagenverbund von unten her und das freie Ende der Stopperlage ist nach oben und auswärts umgefalzt um dergestalt die flanschartigen Enden der äußeren Randdichtungen klemmend festzulegen. Außerhalb des derart gebildeten Klemmspalts spreizen die äußeren Dichtlagen sich auf und bilden dergestalt einen Widerhalt gegenüber dem umgelegten Rand der Stopperlage, so dass eine gleitende Bewegung sowohl der Dichtungslagen untereinander als auch gegenüber der Stopperlage des Dichtungsverbundes bei thermischer Beanspruchung vermieden ist. Etwaig durch thermische Beanspruchung auftretende Verformungen im Dichtlagenverbund werden insoweit durch die Ringdichtung mit ihren beiden gegenüberliegend angeordneten elastisch nachgiebigen Überständen ausgeglichen, was jedoch die Dichtwirkung beeinträchtigen kann.

Ausgehend von diesem Stand der Technik liegt daher der Erfindung die Aufgabe zugrunde, ein Abschirmteil, insbesondere Hitzeschild, zu schaffen, das bei niedrigen Kosten mehrfunktional einsetzbar ist, und das sich versagensfrei in thermisch beanspruchten Zonen einsetzen läßt. Eine dahingehende Aufgabe löst ein Abschirmteil mit den Merkmalen des Patentanspruches 1 in seiner Gesamtheit.

Dadurch, dass gemäß dem kennzeichnenden Teil des Patentanspruches 1 die Dichtung derart ausgebildet ist, dass mindestens ein Schirmteil gegenüber seiner sonstigen Flächenausdehnung einen Überstand aufweist, dass der Übergriff entlang der die Durchgriffsöffnung umfassenden Verbindungslinie derart erfolgt, dass ein äußeres Schirmteil das mittlere und das weitere Schirmteil umgreift, und dass innerhalb des Übergriffs zumindest teilweise die Schirmteile reibschlüssig um eine Ausgleichsstrecke relativ gegeneinander verschiebbar gehalten sind, ist jedenfalls die im Stand der Technik aufgezeigte starre Verbindung der Schirmteile mit ihren Einzellagen vermieden. Vielmehr können diese in Abhängigkeit von der thermischen Situation gegenseitig aneinander "abgleiten", ohne dass hierdurch die Verbindung entlang der gemeinsamen Verbindungslinie beeinträchtigt wäre. Aufgrund der zugelassenen relativen Verschiebebewegung der Schirmteile zueinander sind thermische Beuleffekte vermieden und die Schirmteile reißen auch nicht länger ein; auch nicht im Bereich ihrer Festlegung an sonstigen Maschinen- oder Fahrzeugteilen. Da bei jeder thermischen Situation in jedem Festlegzustand die reibschlüssige Verbindung der Schirmteile mit der Verschiebemöglichkeit erhalten bleibt, läßt sich das erfindungsgemäße Abschirmteil eben auch in solchen thermisch beanspruchten Zonen einsetzen, beispielsweise unmittelbar im Dichtungsbereich einer Zylinderkopfdichtung, wo der bisherige Einsatz von dahingehenden Schirmteilen als Hitzeschild nicht möglich war. Die eingesetzte Dichtung bleibt mit ihrer Dichtfunktion im Sinne einer stationär angeordneten Dichtung voll umfänglich erhalten, auch wenn thermisch bedingt die Schirmteile und deren Lagen sich relativ zueinander zum Herbeiführen eines Lagerausgleiches bewegen sollten.

Sofern mindestens ein Schirmteil gegenüber seiner sonstigen Flächenausdehnung den Überstand aufweist, ist in einem Hitzeschild zur Schall- und Wärmeisolierung die weitere Funktion in Form der Dichtfunktion realisiert, so dass mit einem Abschirmteil in kostengünstiger Weise zumindest im genannten Rahmen eine Mehrfachfunktion sichergestellt ist. Mit dem erfindungsgemäßen Abschirmteil ist es möglich, ein übliches, auch mehrlagiges Hitzeschild mit einer Dichtung zu versehen, die in heißen Bereichen einen Fluiddurchtritt durch das Abschirmteil abdichten hilft. Dabei ist vorgesehen, dass der dichtende Überstand mindestens eines Schirmteiles als Ringdichtung ausgebildet ist, der die Durchtrittsöffnung auch in Form einer Brennraumöffnung umfaßt, die durch alle Schirmteile gleichermaßen hindurchgeht.

Weitere vorteilhafte Ausführungsformen des erfindungsgemäßen Abschirmteils sind Gegenstand der sonstigen Unteransprüche.

Im folgenden wird das erfindungsgemäße Abschirmteil anhand eines Ausführungsbeispiels nach der Zeichnung näher erläutert. Dabei zeigen in prinzipieller und nicht maßstäblicher Darstellung die
- Fig. 1: eine perspektivische Draufsicht auf das Abschirmteil; I;
- Fig.2: eine perspektivische Unteransicht auf das Abschirmteil und
- Fig.3: einen Schnitt längs der Linie II - II nach der Fig.2.

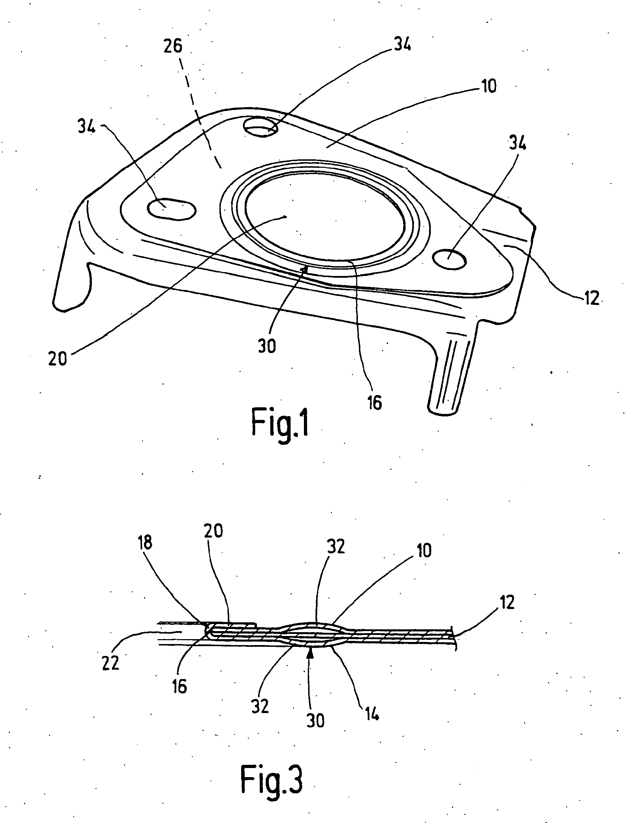

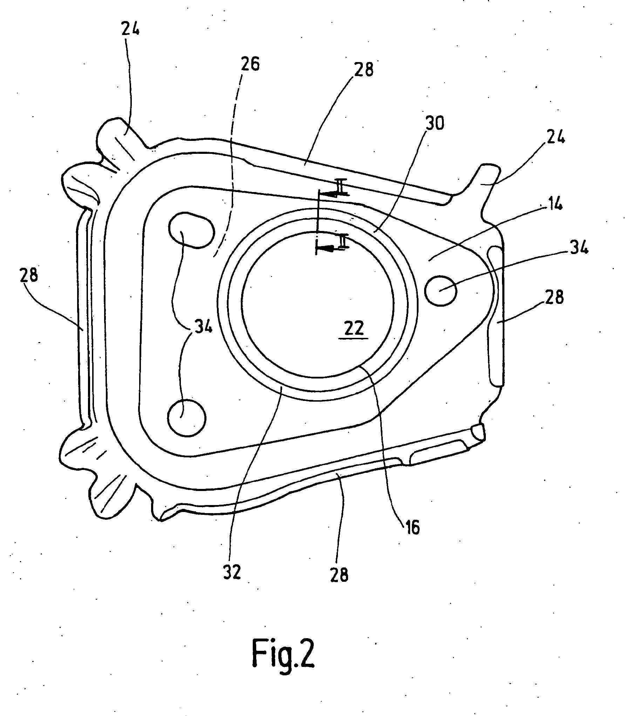

Das erfindungsgemäße Abschirmteil ist insbesondere in der Art eines Hitzeschildes ausgebildet und besteht zumindest im Mittenbereich aus zumindest teilweise flächig übereinanderliegenden einzelnen Schirmteilen 10,12,14. Die dahingehenden Schirmteile 10,12,14 sind entlang einer gemeinsamen Verbindungslinie 16 miteinander verbunden, wobei entlang dieser gemeinsamen Verbindungslinie 16 das in Fig.2 gezeigte untere Schirmteil 14 das mittlere Schirmteil 12 sowie das obere Schirmteil 10 randseitig in einem Übergriff 18 (vg. Fig. 3) umfaßt. Der Übergriff 18 ist insbesondere dadurch hergestellt, dass das untere Schirmteil 14 entlang eines innenumfangsseitigen Endes mit seinem freien Rand um eine vorgebbare Randfassung 20 umgelegt ist und die dahingehende Randfassung 20 gibt im wesentlichen eine definierte Ausgleichsstrecke vor, um die die Schirmteile 10,12,14 reibschlüssig gegeneinander verschiebbar gehalten sind, um derart thermisch auftretende Ausdehnungen zumindest im Bereich der Verbindung zu kompensieren.

Wie sich des weiteren aus den Figuren ergibt, hat die genannte Verbindungslinie 16 einen bogenförmigen Verlauf und umfaßt insbesondere eine kreisrunde Durchgriffsöffnung 22, die durch alle Schirmteile 10,12,14 hindurchgeht und die dem möglichen Durchtritt eines Fluidstromes dient, der auch gasförmig sein kann.

Das im Mittenbereich von den beiden Schirmteilen 10,14 begrenzte mittlere Schirmteil 12 ist vorzugsweise als Blechumformteil ausgebildet und weist zumindest teilweise randseitig umgebogene Abdeckflächen 24 in der Art einer Abdeckhaube auf, wobei die Abdeckflächen 24 mit dazu beitragen, eine thermische und/oder Schallisolierung sicherzustellen. Das dahingehende mittlere Schirmteil 12 ist mehrlagig, insbesondere zwei- oder dreilagig, aufgebaut, wobei bei einem dreilagigen Aufbau zwei Blechdecklagen eine nicht näher dargestellte isolierende Zwischenschicht zwischen sich aufnehmen können und dergestalt überdecken. Der Aufbau dahingehender Hitzeschilder ist üblich und beispielsweise in der nachveröffentlichten DE 10 2004 030 621 beschrieben, so dass an dieser Stelle hierauf nicht mehr näher eingegangen wird. Damit die beiden Blechdecklagen des mittleren Schirmteils 12 fest aneinander halten, ist außenumfangsseitig vorgesehen, dass zumindest teilweise die obere Blechdecklage die untere Blechdecklage mittels einer Bördelung 28 übergreift, die der einfacheren Darstellung wegen in der Fig.2 nur teilweise wiedergegeben ist. Die beiden äußeren Schirmteile 10,14 sind im wesentlichen aus gleichen ebenen Blechzuschnitten gebildet und liegen insbesondere im Montagezustand des Abschirmteils eben entlang der jeweiligen Anlagefläche 26 an dem mittleren Schirmteil 12 an, das in allen Richtungen eine größere Ausdehnung hat als der Außenumfangsrand des jeweiligen Schirmteils 10,14, der insoweit die Begrenzung für diese Schirmteile bildet.

Wie sich des weiteren aus den Figuren ergibt, erfolgt der Übergriff 18 entlang der die Durchgriffsöffnung 22 bildenden Verbindungslinie 16, wobei neben dem insbesondere in der Fig.3 aufgezeigten Übergriff 18 die Schirmteile 10,14 eine Dichtung 30 in der Art einer Ringdichtung ausbilden, indem die beiden Schirmteile 10,14 gegenüber ihrer sonstigen Flächenausdehnung einen axialen Überstand 32 aufweisen, der durch die Einprägung einer ringförmigen Sicke (vgl. Fig.3) erzeugt ist. In Abhängigkeit der gewünschten Dichtfunktion und Ausbildung der Dichtung besteht auch die Möglichkeit, die aufgezeigten Überstände 32 radial zueinander versetzt anzuordnen oder nur ein Schirmteil 10,14 mit dem Überstand 32 zu versehen. Der einfacheren Darstellung wegen ist in der Fig.3 das mittlere Schirmteil 12 nur einlagig dargestellt, wobei dem Grunde nach die Möglichkeit einer dahingehenden Ausgestaltung von Schirmteilen 10,12,14 mit insgesamt nur drei Blechlagen möglich ist; ebenso eine Ausgestaltung, bei der nur zwei Schirmteile 10,12 das in Rede stehende Abschirmteil bilden.

Aufgrund der angeführten Reibschlußverbindung der einzelnen Schirmteile 10,12,14 zueinander bleibt auch bei thermischer Beanspruchung eine relative Position der Schirmteile zueinander derart erhalten, dass die Dichtung 30 ihre Funktion im Betrieb erfüllen kann auch bei hoher thermischer Beanspruchung. Da der jeweilige, die Dichtung 30 bildende Überstand 32 einstückiger Bestandteil des Schirmteils 10 sowie des Schirmteils 14 ist, bleibt im Montagezustand des Abschirmteils das mittlere Schirmteil 12 in seiner Einbaulage und relativ zu dieser stationären Einbaulage verschieben sich die beiden miteinander verbundenen Schirmteile 10,14 richtungskonform in den jeweils selben Richtungen. Da der Übergriff 18 im Bereich der Randfassung 20 gemäß der Darstellung nach der Fig.3 vierlagig ist und unabhängig von der Lagenanzahl im Hinblick auf die Umbördelung mit dem unteren Schirmteil 14 immer eine Lage mehr aufweist als der Lagenverbund im Bereich der Dichtung 30, ist durch den genannten Übergriff 18 eine Art Stopperfunktion für die Dichtung 30 dergestalt erreicht, dass diese bei Beanspruchung nicht derart axial zusammengestaucht werden kann, als dass diese die Dichtungsfunktion aufgeben könnte, da der dahingehende etwaige Stauchvorgang durch den maximal vorgesehen Dickenbereich, definiert durch die Dicke der Einzellagen im Stopperbereich des Übergriffs 18, begrenzt ist. Dergestalt wäre das erfindungsgemäße Abschirmteil auch als Zylinderkopfdichtung mit Hitzeschildwirkung einsetzbar. Vorzugsweise umschließt die Ringdichtung 30 den Übergriff 18 mit seine Randfassung 20 im gleichen radialen Abstand, wobei die Dichtung 30 auch anders ausgestaltet sein könnte, beispielsweise dergestalt, dass mehrere Dichtungsringe 30 in konzentrischer Anordnung die Fluiddurchgriffsöffnung 22 (Brennraumöff nung) umfassen.

Die einzelnen Schirmteile 10,12,14 weisen deckungsgleich weitere Durchgriffsöffnungen 34, auch in Form eines Langloches, auf, wobei die dahingehenden weiteren Durchgriffsöffnungen 34 dem Festlegen des Abschirmteils an Motoren- oder Maschinenkomponenten mittels üblicher Festlegemittel, wie Schrauben, dienen.

Mit der erfindungsgemäßen Lösung ist jedenfalls sichergestellt, das nicht ungewollt sich einzelne Befestigungspunkte vom Abschirmteil lösen oder dass Risse am Abschirmteil aufgrund von Wärmespannungen auftreten können. Aufgrund der möglichen Verschiebebewegung der Einzellagen ist die Dichtfunktion über die Dichtung 30 in jeder Arbeitssituation gesichert und dergestalt eine sichere Abdichtung der Durchgriffsöffnung 22 im Sinne einer statischen Abdichtung erreicht, so dass der zu führende Fluidstrom seine Fluidführung beibehält und nicht in die Umgebung austreten kann.

## Patentansprüche

1. Abschirmteil, insbesondere Hitzeschild, bestehend aus zumindest teilweise übereinanderliegenden, flächig ausgebildeten Schirmteilen (10,12,14), die zumindest teilweise entlang mindestens einer gemeinsamen Verbindungslinie (16) miteinander verbunden sind, wobei die Schirmteile (10,12,14) zumindest teilweise eine Dichtung (30) ausbilden, die eine Durchgriffsöffnung (22) umfaßt, die durch alle Schirmteile (10,12,14) hindurchgeht, **dadurch gekennzeichnet, dass** die Dichtung (30) derart ausgebildet ist, dass mindestens ein Schirmteil (10) gegenüber seiner sonstigen Flächenausdehnung einen Überstand (32) aufweist, dass der Übergriff (18) entlang der die Durchgriffsöffnung (22) umfassenden Verbindungslinie (16) derart erfolgt, dass ein äußeres Schirmteil (14) das mittlere (12) und das weitere Schirmteil (10) umgreift, und dass innerhalb des Übergriffs (18) zumindest teilweise die Schirmteile (10,12,14) reibschlüssig um eine Ausgleichsstrecke relativ gegeneinander verschiebbar gehalten sind.

2. Abschirmteil nach Anspruch 1, **dadurch gekennzeichnet, dass** der Überstand (32) als Ringdichtung ausgebildet ist.

3. Abschirmteil nach Anspruch 1 oder 2, **dadurch gekennzeichnet, dass** entlang der gemeinsamen Verbindungslinie (16) mindestens ein Schirmteil (14) ein anderes Schirmteil (10,12) in einem Übergriff (18) umfaßt.

4. Abschirmteil nach Anspruch 2 oder 3, **dadurch gekennzeichnet, dass** die Verbindungslinie (16) einen bogenförmigen Verlauf hat und gleichfalls die Durchgriffsöffnung (22) umfaßt.

5. Abschirmteil nach Anspruch 3 oder 4, **dadurch gekennzeichnet, dass** der Übergriff (18) mindestens eine Lage an Schirmteilen (10,12,14) mehr aufweist als die Dichtung (30).

6. Abschirmteil nach einem der Ansprüche 3 bis 5, **dadurch gekennzeichnet, dass** der Überstand (32) als Ringdichtung an den ringförmigen Übergriff (18) radial anschließend ausgebildet ist.

7. Abschirmteil nach Anspruch 6, **dadurch gekennzeichnet, dass** die Dichtung (30) den Übergriff (18) im gleichen radialen Abstand umschließt.

8. Abschirmteil nach einem der Ansprüche 1 bis 7, **dadurch gekennzeichnet, dass** ein mittleres Schirmteil (12) als Umformteil ausgebildet mit zumindest teilweise randseitig umgebogenen Abdeckflächen (24) versehen ist und dass zwei äußere Schirmteile (10,14) gleichen Zuschnitts das mittlere Schirmteil (12) entlang einer gemeinsamen Anlagefläche (26) zwischen sich aufnehmen.

9. Abschirmteil nach einem der Ansprüche 1 bis 8, **dadurch gekennzeichnet, dass** das mittlere Schirmteil (12) mehrlagig, insbesondere mit einer isolierenden Zwischenschicht versehen ist, und dass die beiden äußeren Schirmteile (10,14) einlagig in der Art von Blechzuschnitten ausgebildet sind.

10. Abschirmteil nach einem der Ansprüche 1 bis 9, **dadurch gekennzeichnet, dass** weitere Durchgriffsöffnungen (30) deckungsgleich die jeweiligen Schirmteile (10,12,14) durchgreifen.

## Claims

1. Shielding part, in particular heat shield, consisting of shield parts (10, 12, 14) of a planar configuration that at least partially lie one on top of the other, which are interconnected at least partially along at least one joint connecting line (16), wherein the shield parts (10, 12, 14) at least partially form a gasket (30) encompassing a through hole (22) that extends through all shield parts (10, 12, 14), **characterised in that** the gasket (30) is configured in such a way that at least one shield part (10) has a projecting portion (32) over the rest of its planar area, that the overlapping engagement (18) of the connecting line (16) encompassing the through hole (22) takes place in such a way that an outer shield part (14) grasps around the middle and the further shield part (10), and that, within the overlapping engagement (18), the shield parts (10, 12, 14) are at least partially retained so as to be frictionally displaceable relative to one another by a compensation distance.

2. Shielding part according to claim 1, **characterised in that** the projecting portion (32) is configured as an annular gasket.

3. Shielding part according to claim 1 or 2, **characterised in that**, along the joint connecting line (16), at least one shield part (14) grasps around another shield part (10, 12) in an overlapping engagement (18).

4. Shielding part according to claim 2 or 3, **characterised in that** the connecting line (16) extends in an arc shape and also encompasses the through hole (22).

5. Shielding part according to claim 3 or 4, **characterised in that** the overlapping engagement (18) includes at least one layer of shield parts (10, 12, 14) more than the gasket (30).

6. Shielding part according to any one of the claims 3 to 5, **characterised in that** the projecting portion (32) is configured as an annular gasket radially adjoining the annular overlapping engagement (18).

7. Shielding part according to claim 6, **characterised in that** the gasket (30) encloses the overlapping engagement (18) at the same radial distance.

8. Shielding part according to any one of the claims 1 to 7, **characterised in that** a middle shield part (12) is configured as a formed part and provided with covering surfaces (24) that are at least partially bent over at the edges, and that two outer shield parts (10, 14) of the same cut shape receive the middle shield part (12) between them along a joint contact surface (26).

9. Shielding part according to any one of the claims 1 to 8, **characterised in that** a middle shield part (12) is multi-layered, in particular provided with an insulating intermediate layer, and that the two outer shield parts (10, 14) are configured single-layered in the manner of sheet-metal blanks.

10. Shielding part according to any one of the claims 1 to 9, **characterised in that** further through holes (30) extend through the respective shield parts (10, 12, 14) in a superimposable manner.

## Revendications

1. Pièce de protection, en particulier écran thermique, constituée de parties de protection (10, 12, 14) de réalisation surfacique superposées au moins partiellement les unes sur les autres, qui sont reliées au moins partiellement les unes aux autres le long d'au moins une ligne de liaison commune (16), les parties de protection (10, 12, 14) réalisant au moins partiellement une étanchéité (30) qui enchâsse une ouverture traversante (22) qui passe à travers toutes les parties de protection (10, 12, 14), **caractérisée en ce que** l'étanchéité (30) est réalisée de telle façon qu'au moins une partie de protection (10) présente une saillie (32) par rapport au reste de son extension surfacique, **en ce que** la coiffe (18) le long de la ligne de liaison (16) qui enchâsse l'ouverture traversante (22) a lieu d'une telle façon qu'une partie de protection (14) extérieure entoure la partie de protection médiane (12) et l'autre partie de protection (10), et **en ce qu'**à l'intérieur de la coiffe (18) les parties de protection (10, 12, 14) sont tenues au moins partiellement avec possibilité de translation les unes par rapport aux autres en coopération de friction sur un trajet de compensation.

2. Pièce de protection selon la revendication 1, **caractérisée en ce que** la saillie (32) est réalisée sous forme d'étanchéité annulaire.

3. Pièce de protection selon la revendication 1 ou 2, **caractérisée en ce que** le long de la ligne de liaison commune (16) au moins une partie de protection (14) enchâsse une autre partie de protection (10, 12) dans une coiffe (18).

4. Pièce de protection selon la revendication 2 ou 3, **caractérisée en ce que** la ligne de liaison (16) présente un tracé en forme d'arc et enchâsse également l'ouverture traversante (22).

5. Pièce de protection selon la revendication 3 ou 4, **caractérisée en ce que** la coiffe (18) comprend au moins une couche de parties de protection (10, 12, 14) de plus que l'étanchéité (30).

6. Pièce de protection selon l'une des revendications 3 à 5, **caractérisée en ce que** la saillie (32) est réalisée sous forme d'étanchéité annulaire qui fait suite radialement à la coiffe (18) de forme annulaire.

7. Pièce de protection selon la revendication 6, **caractérisée en ce que** l'étanchéité (30) entoure la coiffe (18) à distance radiale égale.

8. Pièce de protection selon l'une des revendications 1 à 7, **caractérisée en ce qu'**une partie de protection médiane (12) est réalisée sous forme de pièce conformée dotée de surfaces de recouvrement (24) au moins partiellement rabattues en bordure, et **en ce que** deux parties de protection extérieures (10, 14) présentant le même tracé reçoivent entre elles la partie de protection médiane (12) le long d'une surface d'appui commune (26).

9. Pièce de protection selon l'une des revendications 1 à 8, **caractérisée en ce que** la partie de protection médiane (12) est réalisée à plusieurs couches, en particulier dotée d'une couche intermédiaire isolante, et **en ce que** les deux parties de protection extérieures (10, 14) sont réalisées à une seule couche à la manière de flans de tôle.

10. Pièce de protection selon l'une des revendications 1 à 9, **caractérisée en ce que** d'autres ouvertures traversantes (30) traversent les parties de protection respectives (10, 12, 14) avec des formes identiques.
